# EUROPÄISCHE PATENTSCHRIFT

(11) **EP 2 096 425 B1**
(45) Veröffentlichungstag und Bekanntmachung des Hinweises auf die Patenterteilung: **05.04.2017**
(21) Anmeldenummer: 09153189.7
(22) Anmeldetag: 19.02.2009
(51) Int. Cl.: G01L 25/00

(54) **Betätigungsvorrichtung zum Kalibrieren von Drehmomentschlüsseln**
Actuating device for calibrating torque keys
Dispositif d'actionnement destiné au calibrage de clés dynamométriques

(30) Priorität: 29.02.2008 DE 202008002913 U
(43) Veröffentlichungstag der Anmeldung: 02.09.2009
(73) Patentinhaber: STAHLWILLE Eduard Wille GmbH & Co. KG, 42349 Wuppertal (DE)
(72) Erfinder: Lucke, Michael, 42349, Wuppertal (DE)
(74) Vertreter: Willems, Volker

(56) Entgegenhaltungen:
- EP-A2- 0 372 247
- WO-A1-99/57533
- JP-A- 2004 251 697
- US-A- 4 976 133

## Beschreibung

### Technisches Gebiet

Betätigungsvorrichtung zum Prüfen von Drehmomentschlüsseln mit einem elektronischen Datenspeicher, enthaltend
a) einen Träger, zur Fixierung eines zu prüfenden Drehmomentschlüssels,
b) einen an dem Träger angeordneten Messwertaufnehmer, welcher mit dem Kopfstück des zu prüfenden Drehmomentschlüssels gekoppelt wird,
c) eine auf dem Träger angeordnete Griffhalterung zur Fixierung des Griffs des zu prüfenden Drehmomentschlüssels,
d) einen Auslenkmechanismus zum Erzeugen eines Drehmoments auf das Kopfstück des zu prüfenden Drehmomentschlüssels,
e) eine Kommunikationseinheit, welche zum Datenaustausch mit dem elektronischen Datenspeicher des Drehmomentschlüssels gekoppelt ist.

### Stand der Technik

Drehmomentschlüssel stellen Werkzeuge dar, die Schraubverbindung herstellen, bei denen Schrauben mit einer definierten Kraft vorgespannt werden. Dabei können Verschraubungen mit großen oder kleinen Vorspannkräften belastet werden. Der verstärkte Einsatz von neuen Konstruktionswerkstoffen, wie Magnesium, Aluminium und Kunststoff führt dazu, dass die Zahl empfindlicher Schraubverbindungen stetig zunimmt.

Der Drehmomentschlüssel besteht aus einem Schlüsselhebel mit einem Griff und einem Schlüsselkopf, wobei der Schlüsselkopf oft als Vierkantzapfen ausgebildet ist und als Kupplung für andere Werkzeugaufnahmen dient. So können auf dem Vierkantzapfen verschiedene Steckwerkzeuge zum Drehen von Schrauben oder Muttern gesteckt werden. Bei einer Verschraubung wird vom Anwender eine Kraft auf den Schlüsselhebel und somit auf den Schlüsselkopf übertragen und dadurch ein Drehmoment an einer Schraube oder Mutter erzeugt. Der Drehmomentschlüssel weist eine Messvorrichtung zum Messen des aufgebrachten Drehmoments auf. Weitere Vorrichtungen können das gemessene Drehmoment kontinuierlich anzeigen oder ein Erreichen eines vorgegebenen Drehmoments signalisieren.

Drehmomentschlüssel gibt es in verschiedenen mechanischen oder elektronischen Ausführungen. In der Gruppe der mechanischen Drehmomentschlüssel gibt es beispielsweise die so genannten Knickschlüssel, die bei Erreichen des gewünschten Drehmoments durchknicken oder abbrechen und somit eine weitere Einleitung eines Momentes verhindern. Bei elektronischen, also digital anzeigenden Drehmomentschlüsseln erfolgt die Messung beispielsweise mittels eines Dehnungsstreifen an einem Biege- oder Torsionsstab. Dehnungsstreifen verändern bei geringer Verformung ihren elektrischen Widerstand. Sie werden mittels Spezialkleber auf Stahlteile, wie etwa den Biege- bzw. Torsionsstab aufgeklebt. Am Beispiel des Torsionsstabs ist ein Stab mit fester Einspannung an beiden Enden und einer Feder in der Mitte. Dadurch sind Schwenkbewegungen um die Drehachse des Torsionsstabes möglich, die durch den Dehnungsstreifen gemessen werden können. Das gewonnen Messsignal wird auf einer Anzeige dargestellt. Die eingestellten Drehmomente können während des Verschraubungsanzuges permanent mittels LED oder Anzeige überprüft werden. Parallel können bei dieser Art von Drehmomentschlüssel alle betätigten Messungen bzw. Auslösungen in einen internen Messwertspeicher abgelegt werden.

Dieser Messwertspeicher kann dann jederzeit wieder per Schnittstelle ausgelesen oder direkt auf einen angeschlossen Drucker gedruckt werden.

Die Messvorrichtung des Drehmomentschlüssels unterliegt üblichen Verschleiß- und Ermüdungserscheinungen. Zur Kontrolle, ob ein von der Messvorrichtung gemessenes Drehmoment mit einem aufgebrachten Drehmoment übereinstimmt, muss der Drehmomentschlüssel von Zeit zu Zeit mit einer Betätigungsvorrichtung kalibriert und gegebenenfalls justiert werden. Dazu ist in der Betätigungsvorrichtung ein Träger mit einem Messwertaufnehmer und einer Griffhalterung vorgesehen. Das Kopfstück des Drehmomentschlussels wird, beispielsweise mit dem Vierkantzapfen, fest mit dem Messwertaufnehmer gekoppelt. Der Griff des Drehmomentschlüssels wird durch die Griffhalterung fixiert. Durch einen Auslenkmechanismus wird dann ein Drehmoment auf das Kopfstück des Drehmomentschlüssels erzeugt. Dieses Drehmoment wird von dem Messwertaufnehmer gemessen und mittels einer in der Betätigungsvorrichtung, z.B. am Messwertaufnehmer, vorgesehenen Anzeige dargestellt. Das von dem Drehmomentschlüssel angezeigte Drehmoment oder ein dem Drehmomentschlüssel vorgegebenes Drehmoment für eine Auslösung ist so durch einen Vergleich mit dem auf der Anzeige dargestellten Drehmoment überprüfbar.

Bei den bekannten Betätigungsvorrichtungen zum Prüfen von Drehmomentschlüsseln werden verschiedene Austenkmechanismen zur Erzeugung eines Drehmoments verwendet. Prinzipiell sind zur Erzeugung eines Drehmoments am Kopfstück des Drehmomentschlüssels zwei Varianten möglich. Entweder ist der Messwertaufnehmer drehbar an dem Träger befestigt und die Griffhalterung fest mit dem Träger verbunden, oder, umgekehrt, der Messwertaufnehmer ist fest mit dem Träger verbunden und die Griffhalterung ist beweglich am Träger montiert.

Der Ablauf einer Kalibrierung ist vorgegeben und unterliegt einer bestimmten Norm, z.B. nach DIN, Zur Überprüfung des Drehmomentschlüssels werden zu Beginn der Messung fünf Vorbelastungen bei 100% des Nenndrehmomentes des Drehmomentschlüssels durchgeführt. Danach erfolgen fünf Belastungen bei 20%, bei 60% und bei 100% des Nenndrehmomentes. Bei bisher bekannten Betätigungsvorrichtungen müssen die Prüfdrehmomente an einem Drehmomentschlüssel einzeln eingestellt werden. Der Elektromotor überträgt die Kraft mittels eines Auslenkmechanismus, der insbesondere auch als Getriebe ausgebildet sein kann, auf den Kopf des Drehmomentschlüssels. Die Drehmomente des zu untersuchenden Drehmomentschlüssels werden von einem Messwertaufnehmer erfasst. Der Prüfer muss also einerseits die erforderlichen Prüfdrehmomente eingeben und andererseits die vom Messwertaufnehmer ermittelten Werte ablesen. Das bedeutete einen großen zeitlichen Arbeitsaufwand, um die Kalibrierung der Drehmomentschlüssel nach der geforderten Norm durchzuführen.

Zur Automatisierung beschreibt die JP 2004 25 1697 eine Betätigungsvorrichtung zum Prüfen von Drehmomentschlüsseln. Die Betätigungsvorrichtung weist einen Träger, zur Fixierung eines zu prüfenden Drehmomentschlüssels auf. Auf dem Träger befindet sich ein Messwertaufnehmer, welcher mit dem Kopfstück des zu prüfenden Drehmomentschlüssels verbunden wird. Zur Fixierung wird der Griff des zu prüfenden Drehmomentschlüssels in einer Griffhalterung auf dem Träger befestigt. Mit Hilfe eines Auslenkmechanismus wird ein Drehmoment auf das Kopfstück des zu prüfenden Drehmomentschlüssels erzeugt. Ein Computer verwaltet die Messdaten und steuert die Betätigungsvorrichtung.

### Offenbarung der Erfindung

Der Erfindung liegt die Aufgabe zu Grunde, die Nachteile des Standes der Technik zu vermeiden und die Prüfung der Drehmomentschlüssel rasch und wirtschaftlich durchzuführen.

Erfingdungsgemäß wird die Aufgabe dadurch gelöst, dass bei einer Vorrichtung der eingangs genannten Art
f) die Verbindung zwischen der Kommunikationseinheit und dem Drehmomentschlüssel als eine Dabel-, eine Funk- oder eine

### Infrarotverbindung ausgebildet ist.

Die Erfindung beruht auf dem Prinzip des Datenaustausches zwischen Kommunikationseinheit und Drehmomentschlüssel. Bei Betätigungsvorrichtungen bisher bekannter Art erfolgt die Steuerung der Kalibrierung manuell durch den Prüfer. Die Nenndrehmomente und daraus resultierenden Prüfdrehmomenten der zu testenden Drehmomentschlüssel werden bisher vom Prüfer selbst berechnet und danach von Hand eingeben und angefahren. Durch die erfindungsgemäße Kommunikationseinheit ist es jetzt möglich eine Automatisierung der Kalibrierung von Drehmomentschlüsseln zu ereichen. Grundsätzlich lässt sich diese Betätigungseinrichtung auch für andere Drehmomentwerkzeuge als die beschriebenen Drehmomentschlüssel verwenden, z.B. Drehmomentschraubendreher zur Erfassung von Drehmomenten. Die Kommunikationseinheit hat den großen Vorteil, dass Eingabefehler der Prüfer vermieden und Prüfvorgängen beschleunigt werden können.

In einer vorteilhaften Ausbildung der Erfindung ist der Datenspeicher der Drehmomentschlüsseln elektronisch ausgebildet. Das hat den Vorteil, dass ein direkter Datenaustausch mit der Kommunikationseinheit und dem Drehmomentschlüssel möglich ist. Die Kommunikationseinheit verfügt dazu vorzugsweise über eine digitale Prozessoreinheit mit einem Speicher. Die Nenndrehmomente der zu prüfenden Drehmomentschlüssel können durch den elektronischen Datenaustausch direkt in die Kommunikationseinheit eingelesen werden. Dadurch sind schnelle und exakte Prüfungen durchführbar.

In einer weiteren vorteilhaften Ausgestaltung der Erfindung ist die Verbindung zwischen der Kommunikationseinheit und dem Drehmomentschlüssel als eine Kabel-, eine Funk- oder eine Infrarotverbindung ausgebildet. Durch diese Schnittstelle ist ein schneller Datenaustausch zwischen Kommunikationseinheit und Drehmomentschlüssel möglich. Zudem ist eine räumliche Trennung von Betätigungsvorrichtung und Kommunikationseinheit, insbesondere durch eine Funk- oder Infrarotverbindung möglich. Der Prüfer könnte gegebenenfalls mehrere Betätigungsvorrichtungen mit einer Kommunikationseinheit bedienen. Im weiteren Sinne könnten viele Betätigungsmaschinen zentral über eine Kommunikationseinheit verwaltet werden. Dies ist besonders wirtschaftlich und erfordert weniger Platz zum Kalibrieren von Drehmomentschlüsseln.

Eine vorteilhafte Ausführung der Erfindung ist, dass der Drehmomentschlüssel für ein eingestelltes Drehmoment auslösend ausgebildet ist, wobei das jeweils zu prüfende auszulösende Drehmoment mit Hilfe der Kommunikationseinheit in dem elektronischen Datenspeicher des Drehmomentschlüssels eingestellt wird. Dies hat den großen Vorteil, dass der Prüfer die einzelne Prüfdrehmomente nicht mehr errechnen und manuell eingeben muss. Die Kommunikationseinheit bestimmt direkt die für die Normierung der Drehmomentschlüssel entsprechenden Prüfdrehmomente und leitet diese an den elektronischen Datenspeicher des Drehmomentschlüssels weiter. Die Messung der Drehmomentschlüssel kann dadurch sehr schnell und exakt erfolgen, da der Prüfer die einzelnen Prüfdrehmomente nicht mehr von Hand eingeben muss.

In einer weiteren vorteilhaften Ausgestaltung ist der Datenspeicher des Drehmomentschlüssels als optischer Code ausgebildet. Die für die Messung relevanten Daten sind auf dem optischen Code des Drehmomentschlüssels gespeichert. Nach dessen Eingabe in die Kommunikationseinheit werden die entsprechenden Prüfdrehmomente ermittelt und für die Messung eingesetzt. Mit der erfindungsgemäßen Maßnahme können auch Drehmomentschlüssel durch die Betätigungsvorrichtung kalibriert werden, die nicht elektronisch sind. Der Prüfer übermittelt mit Hilfe des optischen Codes die Prüfdrehmomente der Drehmomentschlüssel der Kommunikationseinheit, so dass die *einzelnen* Prüfdrehmomente nicht mehr manuell eingeben werden müssen.

In einer weiteren vorteilhaften Ausbildung der Erfindung für Drehmomentschlüssel mit optischem Code weist die Kommunikationseinheit einen Scanner zum Auslesen des optischen Codes auf. Dies hat den Vorteil, dass Fehler der Prüfer vermieden werden, die bei einer manuellen Eingabe des optischen Codes auftreten können. Der Scanner ist direkt mit der Kommunikationseinheit verbunden und verkürzt und optimiert dadurch erheblich die Dateneingabe der Drehmomentschlüssel. Dabei kann der optische Code beispielsweise als Barcode ausgestaltet sein.

Gemäß einer weiteren vorteilhaften Ausgestaltung der Erfindung hat der Messwertaufnehmer einen zugeordneten digitalen Datenspeicher zur digitalen Speicherung wenigstens eines Messwerts. Dies hat den Vorteil, dass der Benutzer durch das Speichern der gemessen Drehmomentwerte eine Protokollierung eines Prüfvorgangs ermöglicht und eine Archivierung von Prüfvorgängen erlaubt. Der digitale Speicher hat weiterhin den Vorteil verschiedene Prüfvorgänge miteinander zu vergleichen und somit die Reproduzierbarkeit von Prüfvorgängen zu gewährleisten.

Vorteilhaft ist, dass eine Auswerteinheit zur Verarbeitung und/oder zur Speicherung von übermittelten Daten des Drehmomentschlüssels und/oder wenigstens eines Messwerts des Messwertaufnehmers vorhanden ist. Dadurch können erstellte Messprotokolle mit früheren oder auch späteren Protokollen verglichen werden. Des weiteren bietet die Auswerteinheit den Vorteil verschiedene Drehmomentschlüssel in ihrem Messverhalten miteinander zu vergleichen. Dadurch können unterschiedliche Fabrikate von Drehmomentschlüsseln auf Grund ihrer Verschleißerscheinungen verglichen und beurteilt werden.

Als vorteilhafte Ausgestaltung enthält die Betätigungsvorrichtung zum Kalibrieren eines Drehmomentschlüssels mit einem Datenspeicher eine Steuereinrichtung zur Steuerung des Auslenkmechanismus für das zu prüfende Drehmoment. Dies hat den Vorteil, dass der Auslenkmechanismus die Prüfdrehmomente exakt auf den Kopf des Drehmomentschlüssels übertragen kann. Kommuniziert die Steuereinrichtung beispielsweise mit der Kommunikationseinheit in geeigneter Weise, können die Kalibrierungen der Drehmomentschlüssel automatisch durchgeführt werden.

In einer weiteren vorteilhaften Ausführung ist bei einer Betätigungsvorrichtung zum Prüfen eines Drehmomentschlüssels mit einem Datenspeicher ein Stellmotor zur Betätigung des Auslenkmechanismus vorgesehen. Durch diese Maßnahme ist eine gleichmäßige Auslenkung des Auslenkhebels gewährleistet. Der Prüfer muss den Auslenkhebel nicht mehr, wie üblich mit einer Kurbel bewegen, so dass Messfehler durch unterschiedliche Anzugsgeschwindigkeiten, vermieden werden. Die Messvorgänge lassen sich durch eine geeignete Ansteuerung des Motors einfach automatisieren.

Gemäß einer weiteren vorteilhaften Ausgestaltung der Erfindung sind bei Betätigungsvorrichtung zum Prüfen eines Drehmomentschlüssels mit einem Datenspeicher Mittel zum Steuern des Auslenkmechanismus nach Maßgabe der durch den Drehmomentschlüssel übermittelten Daten an die Kommunikationseinheit vorhanden. Diese Mittel können beispielsweise eine Spindel oder ein Riementrieb sein, die durch einen Antrieb angetrieben werden. Auch ein direkter Antrieb durch beispielsweise einen Elektromotor ist denkbar.

Als vorteilhafte Ausbildung der Erfindung sind bei den Betätigungsvorrichtungen zum Prüfen eines Drehmomentschlüssels mit einem Datenspeicher Mittel zum Justieren des Drehmomentschlüssels vorgesehen. Nach Messung der Drehmomentschlüssel ist es erforderlich diese *ggf*. auch zu justieren. Dies kann manuell durch ein Werkzeug erfolgen oder maschinell durch entsprechende Vorrichtungen. Erst nach erfolgter Justierung können die Drehmomentschlüssel wieder zur Arbeit eingesetzt werden.

In einer bevorzugten Ausgestaltung der Erfindung ist ein Datenspeicher vorgesehen, in dem eine Datenbank mit Daten für Messungen des Drehmomentschlüssels abgespeichert ist. Damit kann die Kommunikationseinheit auf Datenbestände zugreifen, die insbesondere die Größe des Speichers eines Drehmomentschlüssels überschreiten würde. Es reicht beispielsweise aus, nur die Seriennummer des zu messenden Drehmomentschlüssels zu erfassen. Die zugehörigen Daten für das Messprogramm bezieht die Kommunikationseinheit aus dieser Datenbank.

Weitere Ausgestaltungen und Vorteile ergeben sich aus dem Gegenstand der Unteransprüche, sowie den Zeichnungen mit den dazugehörigen Beschreibungen.

### Kurze Beschreibung der Zeichnung

- Fig. 1: zeigt eine Prinzipskizze einer Betätigungsvorrichtung mit erfindungsgemäßer Kommunikationseinheit in Draufsicht.
- Fig. 2: zeigt eine Prinzipskizze der Betätigungsvorrichtung von oben in dreidimensionaler Darstellung.
- Fig. 3: zeigt eine Prinzipskizze der Betätigungsvorrichtung von unten in dreidimensionaler Darstellung.

### Bevorzugtes Ausführungsbeispiel

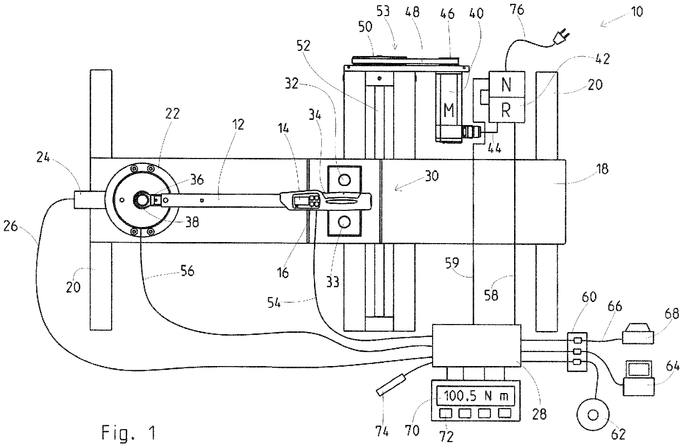

Fig. 1 zeigt eine Betätigungsvorrichtung 10 zum Prüfen von Drehmomentschlüsseln 12 mit einem Datenspeicher 14 und einem Bedienerfeld 16. Die Betätigungsvorrichtung 10 besteht aus einem Träger 18 mit zwei Standfüßen 20, die gegebenenfalls mit einer Unterlage verschraubt werden können und somit einen sicheren Stand ermöglichen. Auf dem Träger 18 ist ein Messwertaufnehmer 22 montiert, der einen flüchtigen Datenspeicher 24 aufweist. Der flüchtige Datenspeicher 24 ist über eine Verbindung 26 mit einer Kommunikationseinheit 28 vernetzt, die beispielsweise als prozessorgesteuerte Platine ausgebildet sein kann. Auf dem Träger 18 befindet sich weiterhin eine Griffhalterung 30, die mit einem ersten und einem zweiten Zapfen 32, 33 versehen ist. Der Griff 34 des Drehmomentschlüssels 12 befindet sich zwischen den Zapfen 32, 33 in der Griffhalterung 30. Kopf 36 des Drehmomentschlüssels 12 wird durch eine Aufnahme 38 fest mit dem Messwertaufnehmer 22 gekoppelt.

Die Betätigungsvorrichtung 10 ist mit einem Servomotor 40 ausgestattet, der mit einer Motorsteuerung 42 über ein Kabel 44 angesteuert wird. Der Servomotor 40 treibt eine kleine Scheibe 46 eines Riementriebs 49 an. Zur Übersetzung wird ein Riemen 48 auf eine größere Scheibe 50 übertragen, die mit einer Spindel 52 verbunden ist. Die Spindel 52 ist in einem Auslenkmechanismus 53 enthalten. Der Auslenkmechanismus 53 ist dazu an der Unterseite des Trägers 18 der Betätigungsvorrichtung 10 vorgesehen.

Die Kommunikationseinheit 28 ist mit einem Datenspeicher 14 des Drehmomentschlüssel 12 und dem Datenspeicher 24 des Messwertaufnehmers 22 über Leitungen 54, 56 verbunden. Ferner steht die Kommunikationseinheit 28 über die Motorsteuerung 42 mit dem Servomotor 40 über Verbindungen 58, 59 in Kontakt. Die Kommunikationseinheit 28 weist einen Datenbus 60 auf, an dem ein externes Peripheriegerät, wie z.B. ein Speicherlaufwerk 62 oder eine Datenverarbeitungsanlage 64, als Verarbeitungseinheit, angeschlossen ist. Der Datenbus 60 der Kommunikationseinheit 28 kann auch über eine geeignete Druckerschnittstelle 66 einen Drucker 68 direkt ansteuern, der z.B. Kalibiereierscheine oder sonstige Messprotokolle ausdrucken kann. Die Kommunikationseinheit 28 verfügt über eine Anzeige 70 und wird mit Hilfe eines Bedienerfelds 72 bedient.

Weiterhin ist ein Scanner 74 an die Kommunikationseinheit 28 anschließbar. Falls der Drehmomentschlüssel 12 über keinen eignen digitalen Datenspeicher 14 verfügt, kann die Information bzgl. des Drehmomentschlüssels 12 sonst auch als Barcode gespeichert sein und auf dem Drehmomentschlüssel aufgeklebt werden. Dieser Barcode kann mittels des Scanners 74 ausgelesen und der Kommunikationseinheit 28 übermittelt werden. Über eine Spannungsversorgung 76 wird die Betätigungsvorrichtung 10 elektrisch versorgt.

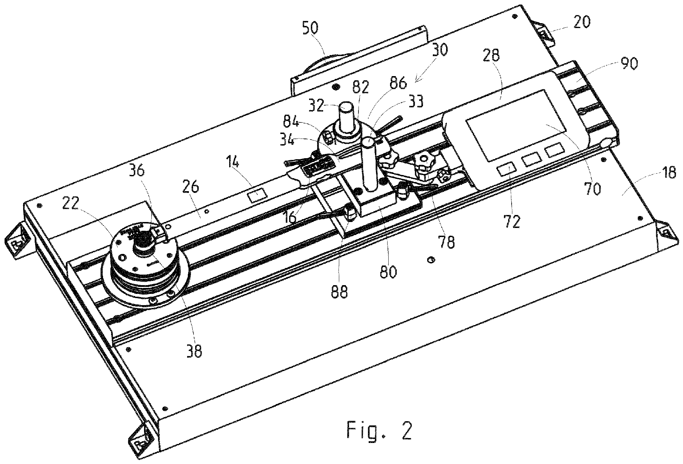

Fig. 2 zeigt die Betätigungsvorrichtung 10 mit der Kommunikationseinheit 28. Auf der Kommunikationseinheit 28 ist die Anzeige 70 mit dem Bedienerfeld 72 zu erkennen. Die Kommunikationseinheit 28 ist durch Befestigungsmittel 78 mit der Griffhalterung 30 verbunden. Auf einer Brücke 80 der Griffhalterung 30 sind die Zapfen 32, 33 angeordnet. Der erste Zapfen 32 verfügt über eine Hülse 82, die am unteren Ende eine Auflagefläche 84 sitzt. Die Hülse 82 ist auf dem Zapfen 32 leicht verschiebbar und kann mit einer Klemmschraube 86 an diesem fixiert werden. Durch die Verschiebbarkeit der Hülse 82 auf dem ersten Zapfen 32 werden vertikale Reibungskräfte während des Messvorgangs weitestgehend vermieden. Dies ermöglicht eine gleichmäßige Drehmomentsübertragung auf den Drehmomentschlüssel 12.

Die Griffhalterung 30 ist durch Klemmhebel 88 an einer Schiene 90 der Betätigungsvorrichtung 10 arretiert. Durch Lösen der Klemmhebel 88 kann die gesamte Griffhalterung 30 auf der Schiene 90 des Trägers 18 verschoben werden. Die Betätigungsvorrichtung 10 kann so an verschiedene Größen der zu kalibrierenden Drehmomentschlüssel 12 angepasst werden. Der Kopf 36 des Drehmomentschlüssels 12 ist durch eine Aufnahme 38 mit dem Messwertaufnehmer 22 verbunden. Die große Scheibe 50 des Riementriebs 49 ist seitlich an der Betätigungsvorrichtung 10 zu erkennen.

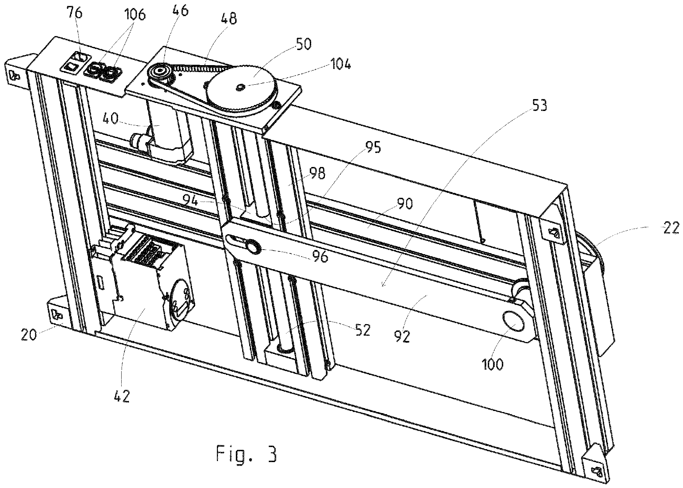

Fig. 3 zeigt die Betätigungsvorrichtung 10 von unten. In dieser Darstellung ist der Auslenkmechanismus 53 deutlich zu sehen. Ein Auslenkhebel 92 ist an einem Ende mit einem Spindelschlitten 94 gelenkig verbunden. Der Spindelschlitten 94 weist eine Gewindebohrung 95 auf. Durch Zusammenwirken der Gewindebohrung 95 mit der Spindel 52 wird der Spindelschlitten 94 durch Drehung der Spindel 52 entlang der Spindelachse je nach Drehrichtung in die eine oder in die andere Richtung angetrieben. Damit der Spindelschlitten 94 stabil geführt wird, sind zusätzlich parallel zur Spindel 52 Führungsschienen 98 vorgesehen

Ein Bolzen 96 hält den Auslenkhebel 92 gelenkig an dem Spindelschlitten 94, während der Auslenkhebel 92 bei einer Messung mit dem Spindelschlitten 52 entlang der Spindelachse ausgelenkt wird. Am anderen Ende des Auslenkhebels 92 befindet sich ein Drehzapfen 100, der durch eine Ausnehmung des Trägers 18 geführt wird und sowohl mit dem Messwertaufnehmer 22, als auch mit dem Kopf 36 des Drehmomentschlüssels 12 gekoppelt ist. Der Drehzapfen 100 wird durch eine Lagerung 102 drehbar am Träger 18 gehalten. Der durch die Motorsteuerung 42 geregelt Servomotor 40, ist hinter der Spindel 52 angebracht und treibt die kleine Scheibe 46 des Riementriebes 49 an. Der Versorgungsanschluss 76 ist an der Seite der Betätigungsvorrichtung zu finden. Über diverse Schnittstellen 106 lässt dich die Betätigungsvorrichtung 10 mit anderen Geräten verbinden.

Die Funktionsweise der Betätigungsvorrichtung 10 lässt sich wie folgt beschreiben:

Bei einer Messung wird der Kopf 36 des Drehmomentschlüssels 12 durch die Aufnahme 38 in den Messwertaufnehmer 22 eingesetzt. Der Griff 34 des Drehmomentschlüssels 12 liegt in der Griffhalterung 30, die je nach Länge des Griffs 34 auf der Schiene 90 des Trägers 18 beweglich einstellbar ist. Der Datenspeicher 14 des Drehmomentschlüssels 12 steht über die Leitung 54 in Verbindung mit der Kommunikationseinheit 28. Die Kommunikationseinheit 28 liest den Datenspeicher 14 des Drehmomentschlüssels 12 aus, um dort z.B. gespeicherte Nenndrehmoment, Drehmomentschlüsseltyp, Seriennummer und/oder Prüfprogramme für eine durchzuführende Messung zu erhalten. Das Nenndrehmoment des Drehmomentschlüssels 12, sowie der Soll-Wert werden auf der Anzeige 70 angezeigt. Intern errechnet die Kommunikationseinheit 28 oder die angeschlossene Verarbeitungseinheit 64 nun die auszuführenden Prüfdrehmomente.

Über die Motorsteuerung 42, die den Antrieb des Servomotors 40 regelt, gibt der Kommunikationseinheit 28 den Befehl eines der errechneten Prüfdrehmomente auf den Drehmomentschlüssel 12 einwirken zu lassen. Die große Scheibe 50 des Riementriebs 49 betätigt dazu die Spindel 52. Die Spindel 52 lenkt den Auslenkhebel 92 der Betätigungsvorrichtung 10 aus, so dass das Prüfdrehmoment mit Hilfe des Auslenkhebels 92 über den Drehzapfen 100 auf das Kopfstück 36 des Drehmomentschlüssels 12 übertragen wird.

Der Messwertaufnehmer 22 misst nun das anliegende Drehmoment. Das Ergebnis wird in dem flüchtigen Datenspeicher 24 als Zwischenspeicher abgelegt und von der Kommunikationseinheit 28 ausgelesen. Der Ist-Wert wird anschließend mit dem Soll-Wert entweder direkt in der Kommunikationseinheit 28 oder in einer externen Verarbeitungseinheit 64 verglichen. Nach Beendigung der Messung werden die Daten auf den Drucker 68 geleitet, der beispielsweise Kalibrierscheine ausdrucken kann. Alternativ oder in Kombination können die Daten in der Datenverarbeitungsanlage 64 gespeichert und archiviert werden.

Eine Justierung der Drehmomentschlüssel 12 kann nach der Messung entweder manuell oder direkt von der Kommunikationseinheit 28 ausgeführt werden. Dazu werden die entsprechend an die Kalibrierung angepassten Daten bzw. digitale Kennlinien in den Datenspeicher 14 des Drehmomentschlüssels 12 zurück geschrieben.

Die Prüfung des Drehmomentschlüssels 12 wird üblicherweise mit unterschiedlichen Prüfdrehmomenten durchgeführt. Die Prüfung unterliegt einer bestimmten Norm und sollte für die Vergleichbarkeit immer gleich ausgeführt werden. Für jede Prüfung werden beispielsweise fünf Vorbelastungen bei 100% des Nenndrehmomentes des zu untersuchenden Drehmomentschlüssels 12 durchgeführt. Danach erfolgen jeweils fünf Prüfungen bei 20%, 50% und 100% des Nenndrehmomentes.

Die Kommunikationseinheit 28 ist nun in der Lage alle zur Prüfung notwendigen Arbeitsschritte vollkommen automatisch zu regeln. Dazu gehört zum einen das Einlesen des Nennprüfdrehmoments des jeweiligen Drehmomentschlüssels 12 mittels der Kommunikationseinheit 28 aus dem Datenspeicher 14 des Drehmomentschlüssels 12. Zum anderen werden die benötigten Prüfdrehmomente von der Kommunikationseinheit 28 bzw. der externen Verarbeitungsanlage 64 automatisch errechnet und die Prüfung der Drehmomentschlüssel 12 eingeleitet. Die Daten für die verschieden Typen an Drehmomentschlüsseln 12 können dabei auch in einer Datenbank der Verarbeitungsanlage 64 abgelegt sein. Nach Auslesen beispielsweise des Drehmomentschlüsseltyps oder einer Seriennummer aus dem Datenspeicher 14 kann die Datenbank der Verarbeitungsanlage 64 für das entsprechende Messprogramm abgefragt werden. Die Datenbank wird dazu durch die Kommunikationseinheit 28 ausgelesen, so dass die Prüfung anhand dieser ausgelesenen Daten erfolgt. Die sich daraus ergebenen Daten werden an den Servomotor 40 über die Motorsteuerung 42 weitergegeben. Der Servomotor 40 steuert den Auslenkmechanismus 53 entsprechend an.

Die Kommunikationseinheit 28 kontrolliert als zentrale Stelle den kompletten Ablauf einer Kalibrierung der Drehmomentschlüssel 12. Eingabefehler von Prüfern, die unweigerlich bei Messungen auftreten, werden durch die Kommunikationseinheit 28 ausgeschaltet. Der zeitliche Ablauf wird enorm verkürzt und die Kalibrierung von Drehmomentschlüssel 12 wirtschaftlich optimiert. Hierdurch lässt sich ferner der Messablauf vollkommen automatisch protokollieren. Die Protokolle können digital archiviert und/oder ausgedruckt werden.

**Bezugszeichenliste**

| | |
|---|---|
| 10 | Betätigungsvorrichtung |
| 12 | Drehmomentschlüssel |
| 14 | Datenspeicher |
| 16 | Bedienerfeld |
| 18 | Träger |
| 20 | Standfüße |
| 22 | Messwertaufnehmer |
| 24 | flüchtiger Datenspeicher |
| 26 | Verbindung |
| 28 | Kommunikationseinheit |
| 30 | Griffhalterung |
| 32 | erster Zapfen |
| 33 | zweiter Zapfen |
| 34 | Griff des Drehmomentschlüssels |
| 36 | Kopf des Drehmomentschlüssels |
| 38 | Aufnahme |
| 40 | Servomotor |
| 42 | Motorsteuerung |
| 44 | Kabel |
| 46 | kleine Scheibe |
| 48 | Riemen |
| 49 | Riementrieb |
| 50 | große Scheibe |
| 52 | Spindel |
| 53 | Auslenkmechanismus |
| 54,56 | Leitungen |
| 58,59 | Verbindung |
| 60 | Datenbus |
| 62 | Speicherlaufwerk |
| 64 | Datenverarbeitungsanlage |
| 66 | Druckerkabel |
| 68 | Drucker |
| 70 | Anzeige |
| 72 | Bedienerfeld |
| 74 | Scanner |
| 76 | Versorgungsanschluss |
| 78 | Befestigung |
| 80 | Brücke |
| 82 | Hülse |
| 84 | tellerförmige Auflage |
| 86 | Klemmschraube |
| 88 | Klemmhebel |
| 90 | Schiene |
| 92 | Auslenkhebel |
| 94 | Spindelschlitten |
| 95 | Gewindebohrung |
| 96 | Bolzen |
| 98 | Führungsschiene |
| 100 | Drehzapfen |
| 102 | Lagerung |
| 104 | Stift |
| 106 | diverse Schnittstellen |

## Patentansprüche

1. Betätigungsvorrichtung (10) zum Prüfen eines Drehmomentschlüssels (12) mit einem elektronischen Datenspeicher (14), enthaltend
a) einen Träger (18), zur Fixierung eines zu prüfenden Drehmomentschlüssels (12),
b) einen an dem Träger (18) angeordneten Messwertaufnehmer (22), welcher mit dem Kopfstück (36) des zu prüfenden Drehmomentschlüssels (12) gekoppelt wird,
c) eine auf dem Träger(18) angeordnete Griffhalterung (30) zur Fixierung des Griffs (34) des zu prüfenden Drehmomentschlüssels (12),
d) einen Auslenkmechanismus (53) zum Erzeugen eines Drehmoments auf das Kopfstück (36) des zu prüfenden Drehmomentschlüssels (12),
**dadurch gekennzeichnet, dass**
e) eine Kommunikationseinheit (28), welche zum Datenaustausch mit dem elektronischen Datenspeicher (14) des Drehmomentschlüssels (12) gekoppelt ist,
f) die Verbindung zwischen der Kommunikationseinheit (28) und dem Drehmomentschlüssel (12) als eine Kabel-, eine Funk- oder eine Infrarotverbindung ausgebildet ist.

2. Betätigungsvorrichtung (10) zum Prüfen eines Drehmomentschlüssels (12) mit einem Datenspeicher (14) nach Anspruch 1, **dadurch gekennzeichnet, dass** der Drehmomentschlüssel (12) für ein eingestelltes Drehmoment auslösend ausgebildet ist, wobei das jeweils zu prüfende auszulösende Drehmoment mit Hilfe der Kommunikationseinheit (28) in dem elektronischen Datenspeicher (14) des Drehmomentschlüssel (12) eingestellt wird.

3. Betätigungsvorrichtung (10) zum Prüfen eines Drehmomentschlüssels (12) mit einem Datenspeicher (14) nach einem der Ansprüche 1 bis 2, **gekennzeichnet durch** einen dem Messwertaufnehmer (22) zugeordneten digitalen Datenspeicher (24) zur digitalen Speicherung wenigstens eines Messwerts.

4. Betätigungsvorrichtung (10) zum Prüfen eines Drehmomentschlüssels (12) mit einem Datenspeicher (14) nach einem der Ansprüche 1 bis 3, **gekennzeichnet durch** eine Auswerteinheit (64) zur Verarbeitung und/oder zur Speicherung von übermittelten Daten des Drehmomentschlüssels (12) und/oder wenigstens eines Messwerts des Messwertaufnehmers.

5. Betätigungsvorrichtung (10) zum Prüfen eines Drehmomentschlüssels (12) mit einem Datenspeicher (14) nach einem der Ansprüche 1 bis 4, **gekennzeichnet durch** eine Steuereinrichtung (28) zur Steuerung des Auslenkmechanismus (92) für das zu prüfende Drehmoment.

6. Betätigungsvorrichtung (10) zum Prüfen eines Drehmomentschlüssels (12) mit einem Datenspeicher (14) nach einem der Ansprüche 1 bis 5, **dadurch gekennzeichnet, dass** ein Stellmotor (40) zur Betätigung des Auslenkmechanismus (53) vorgesehen ist.

7. Betätigungsvorrichtung (10) zum Prüfen eines Drehmomentschlüssels (12) mit einem Datenspeicher (14) nach einem der Ansprüche 1 bis 6, **gekennzeichnet durch** Mittel zum Steuern des Auslenkmechanismus (28) nach Maßgabe der **durch** den Drehmomentschlüssel (12) übermittelten Daten an die Kommunikationseinheit (28).

8. Betätigungsvorrichtung (10) zum Prüfen eines Drehmomentschlüssels (12) mit einem Datenspeicher (14) nach einem der Ansprüche 1 bis 7, **dadurch gekennzelebnet, dass** Mittel zum Justieren des Drehmomentschlüssels (12) vorgesehen sind.

9. Betätigungsvorrichtung (10) zum Prüfen eines Drehmomentschlüssels (12) mit einem Datenspeicher (14) nach einem der Ansprüche 1 bis 8, **gekennzeichnet durch** einen Datenspeicher, in dem eine Datenbank mit Daten für Messungen des Drehmomentschlüssels (12) abgespeichert ist.

## Claims

1. Activation device (10) for testing a torque wrench (12) with an electronic memory (14), comprising of
a) a support (18) for attaching a torque wrench (12) to be tested.
b) a measurement transducer (22) arranged on the support (18) and which is coupled with the headpiece (36) of the torque wrench (12) to be tested,
c) a grip holder (30) arranged on the support (18) to hold the grip (34) of the torque wrench (12) to be tested,
d) a deflection mechanism (53) to create a torque on the headpiece (36) of the torque wrench (12) to be tested,
**characterized in that**
e) there is a communication unit (28) connected to the electronic data memory (14) of the torque wrench (12) for the purpose of exchanging data,
f) the connection between the communication unit (28) and the torque wrench (12) is formed by a cable, wireless, or infrared link.

2. Activation device (10) for testing a torque wrench (12) with a data memory (14) according to claim 1, **characterized in that** the torque wrench (12) is designed to trigger at a preset torque, whereby the corresponding trigger torque is set in the electronic memory (14) of the torque wrench (12) with the aid of the communication unit (28).

3. Activation device (10) for testing a torque wrench (12) with a data memory (14) according to one of claims 1 to 2, **characterized by** a digital data memory (24) allocated to the measurement transducer (22) to digitally store at least one measured value.

4. Activation device (10) for testing a torque wrench (12) with a data memory (14) according to one of claims 1 to 3, **characterized by** a processing unit (64) for processing and/or storing data transmitted by the torque wrench (12) and/or at least one measured value of the measurement transducer.

5. Activation device (10) for testing a torque wrench (12) with a data memory (14) according to one of claims 1 to 4, **characterized by** a control device (28) to control the deflection mechanism (92) for the torque to be tested.

6. Activation device (10) for testing a torque wrench (12) with a data memory (14) according to one of claims 1 to 5, **characterized in that** there is an actuator (40) for activating the deflection mechanism (53).

7. Activation device (10) for testing a torque wrench (12) with a data memory (14) according to one of claims 1 to 6, **characterized by** devices for controlling the deflection mechanism (28) according to the data transmitter by the torque wrench (12) to the communication unit (28).

8. Activation device (10) for testing a torque wrench (12) with a data memory (14) according to one of claims 1 to 7, **characterized in that** there are devices for adjusting the torque wrench (12).

9. Activation device (10) for testing a torque wrench (12) with a data memory (14) according to one of claims 1 to 8, **characterized by** a data memory in which a database containing data for torque wrench (12) measurements is stored.

## Revendications

1. Dispositif d'actionnement (10) destiné à vérifier une clé dynamométrique (12) munie d'une mémoire de données électronique (14), comprenant
(a) un support (18) destiné à fixer une clé dynamométrique (12) à vérifier ;
(b) un capteur de valeur de mesure (22) disposé sur le support (18) et couplé avec la tête (36) de la clé dynamométrique (12) à vérifier,
(c) une fixation pour poignée (30) disposée sur le support (18) et destinée à fixer la poignée (34) de la clé dynamométrique (12) à vérifier,
(d) un mécanisme de déplacement (53) destiné à générer un couple de rotation sur la tête (36) de la clé dynamométrique (12) à vérifier,
**caractérisé en ce que**
(e) une unité de communication (28) qui est couplée, pour l'échange de données, à la mémoire de données électronique (14) de la clé dynamométrique (12) ;
(f) la connexion entre l'unité de communication (28) et la clé dynamométrique (12) est exécutée sous forme de connexion câblée, radio ou infrarouge.

2. Dispositif d'actionnement (10) destiné à vérifier une clé dynamométrique (12) munie d'une mémoire de données (14), selon la revendication 1, **caractérisé en ce que** la clé dynamométrique (12) est configurée pour se déclencher dans le cas d'un couple de rotation paramétré, le couple de rotation à vérifier se déclenchant à chaque fois étant paramétré à l'aide d'une unité de communication (28) dans la mémoire de données électronique (14) de la clé dynamométrique (12).

3. Dispositif d'actionnement (10) destiné à vérifier une clé dynamométrique (12) munie d'une mémoire de données (14), selon l'une quelconque des revendications 1 à 2, **caractérisé par** une mémoire de données numérique (24) associée au capteur de valeur de mesure (22) et destinée à mémoriser numériquement au moins une valeur de mesure.

4. Dispositif d'actionnement (10) destiné à vérifier une clé dynamométrique (12) munie d'une mémoire de données (14), selon l'une quelconque des revendications 1 à 3, **caractérisé par** une unité d'évaluation (64) destinée à traiter et/ou mémoriser les données transmises de la clé dynamométrique (12) et/ou au moins une valeur de mesure du capteur de valeur de mesure.

5. Dispositif d'actionnement (10) destiné à vérifier une clé dynamométrique (12) munie d'une mémoire de données (14), selon l'une quelconque des revendications 1 à 4, **caractérisé par** un dispositif de commande (28) destiné à commander le mécanisme de déplacement (92) pour le couple de rotation à vérifier.

6. Dispositif d'actionnement (10) destiné à vérifier une clé dynamométrique (12) munie d'une mémoire de données (14), selon l'une quelconque des revendications 1 à 5, **caractérisé en ce qu**'il est prévu un servomoteur (40) destiné à actionner le mécanisme de déplacement (53).

7. Dispositif d'actionnement (10) destiné à vérifier une clé dynamométrique (12) munie d'une mémoire de données (14), selon l'une quelconque des revendications 1 à 6, **caractérisé par** des moyens destinés à commander le mécanisme de déplacement (28) en fonction des données transmises par la clé dynamométrique (12) à l'unité de communication (28).

8. Dispositif d'actionnement (10) destiné à vérifier une clé dynamométrique (12) munie d'une mémoire de données (14), selon l'une quelconque des revendications 1 à 7, **caractérisé en ce qu**'il est prévu des moyens destinés à régler la clé dynamométrique (12).

9. Dispositif d'actionnement (10) destiné à vérifier une clé dynamométrique (12) munie d'une mémoire de données (14), selon l'une quelconque des revendications 1 à 8, **caractérisé par** une mémoire de données dans laquelle est mémorisée une banque de données contenant des données pour les mesures de la clé dynamométrique (12).
